# FASCICULE DE BREVET EUROPEEN

(11) **EP 3 829 977 B1**
(45) Date de publication et mention de la délivrance du brevet: **25.09.2024**
(21) Numéro de dépôt: 19745178.4
(22) Date de dépôt: 01.08.2019
(51) Int. Cl.: B29C 59/16, B23K 26/00, B23K 26/0622, B64D 15/04, B64D 23/00, B64D 33/02, F02C 7/047, B23K 26/352, B64D 29/00, B23K 103/16

(54) **PROCÉDÉ DE TRAITEMENT CONTRE LE GIVRE DE PIÈCE D'AÉRONEF ET PIÈCE D'AÉRONEF**
VERFAHREN FÜR VEREISUNGSSCHUTZ VON FLUGZEUGTEILEN UND FLUGZEUGTEILE
METHOD FOR ANTI-ICING TREATMENT OF AIRCRAFT PARTS AND AIRCRAFT PARTS

(30) Priorité: 03.08.2018 FR 1857304
(43) Date de publication de la demande: 09.06.2021
(73) Titulaire: Safran Nacelles, 76700 Gonfreville-l'Orcher (FR)
(72) Inventeur: RIQUET, Audrey, 76700 GONFREVILLE L'ORCHER (FR)
(74) Mandataire: Germain Maureau
(86) Numéro de dépôt international: PCT/EP2019/070780
(87) Numéro de publication internationale: WO 2020/025752

(56) Documents cités:
- FR-A1- 3 013 241
- US-A1- 2015 136 226
- US-A1- 2016 153 287
- US-A1- 2017 240 985

## Description

La présente invention concerne le traitement contre le givre de pièces d'aéronef, en particulier de pièces en composite à matrice organique de nacelle d'ensemble propulsif d'aéronef.

En phase de vol, un aéronef est soumis à des conditions climatiques pouvant entraîner la formation de givre sur des pièces formant des bords d'attaque et/ou des bords de fuite, notamment sur la lèvre d'entrée d'air d'une nacelle.

Une telle formation de givre peut entraîner des modifications du profil aérodynamique de la nacelle et endommager le moteur en cas d'arrachement de blocs de glace formés sur la lèvre.

Pour empêcher le givrage de gouttelettes d'eau sur la lèvre et la formation de blocs de glace, il est connu de faire circuler dans la lèvre de l'air chaud prélevé par exemple au niveau du moteur.

Les gouttelettes d'eau ainsi réchauffées ruissellent sur la lèvre jusqu'à venir en contact avec des pièces situées en aval de la lèvre. Ces pièces n'étant pas couplées au système de dégivrage ou d'antigivrage, des gouttelettes peuvent givrer sur ces pièces lors de leur ruissellement.

Le document US 2016/153287 A1 décrit un procédé de traitement d'une surface de pièce d'aéronef selon le préambule de la revendication 1 ainsi qu'une pièce d'aéronef en composite à matrice organique selon le préambule de la revendication 5.

Un but de la présente invention est de limiter ce phénomène de ruissellement givrant, en particulier sur les pièces en composite à matrice organique situées en aval de la lèvre d'entrée air.

Plus généralement, la présente invention vise à éviter la formation de givre sur des pièces d'aéronef malgré la présence d'eau non évaporée sur ces pièces.

A cet effet, l'invention se rapporte à un procédé de traitement d'une surface de pièce d'aéronef en composite à matrice organique, ce procédé comprenant une étape de texturation dans laquelle la surface est irradiée par impulsions laser femtosecondes de manière à rendre cette surface superhydrophobe.

Une surface superhydrophobe empêche l'adhésion de gouttelettes d'eau et permet d'éviter la formation de givre sur une pièce ainsi traitée.

Ce procédé permet de traiter la surface de toute pièce sans altérer la sa fonctionnalité. Par exemple, lorsque la pièce comprend un panneau acoustique, la texturation surfacique n'a pas d'incidence sur le traitement acoustique réalisé par le panneau.

De plus, un tel traitement de surface est compatible avec une protection de la pièce contre le rayonnement ultraviolet, à l'aide d'une peinture anti-ultraviolet, et/ou une protection de la pièce à l'aide de peintures organiques.

Dans un mode de réalisation, l'étape de texturation peut être précédée d'une étape de protection de la surface par application d'une peinture organique. A titre d'exemples non limitatifs, cette peinture peut comprendre une base époxyde ou une base polyuréthane.

Les impulsions laser peuvent avoir une durée inférieure à 900 femtosecondes, plus préférentiellement inférieure à 600 femtosecondes.

Selon un aspect de la présente invention, celle-ci se rapporte aussi à une pièce en composite à matrice organique d'aéronef, cette pièce comprenant une surface traitée avec un procédé tel que décrit ci-dessus.

Dans un mode de réalisation, la pièce peut comprendre une surface dotée d'une part de microcratères et d'autre part de cils espacés de manière périodique.

Les microcratères peuvent typiquement avoir un diamètre inférieur à 1 mm, de préférence compris entre 1 µm et 100 µm, et une profondeur inférieure à 10 µm, de préférence comprise entre 600 nm et 1 µm.

Les cils peuvent avoir une dimension inférieure à 1 µm, de préférence comprise entre 1 nm et 800 nm.

Cette pièce en composite à matrice organique peut être ou peut constituer tout ou partie d'une section d'entrée d'air de l'aéronef, ladite surface pouvant être une surface d'un bord d'attaque et/ou d'un bord de fuite de cette section d'entrée d'air.

Selon un autre aspect, l'invention concerne en outre un ensemble propulsif d'aéronef comprenant une telle pièce en composite à matrice organique.

Selon encore un autre aspect, l'invention concerne enfin un aéronef comprenant un tel ensemble propulsif et/ou une pièce en composite à matrice organique telle que définie ci-dessus.

D'autres caractéristiques et avantages de l'invention apparaîtront à la lecture de la description nullement limitative qui suit et des figures annexées, dans lesquelles :
- La figure 1 est une vue schématique d'un ensemble propulsif d'aéronef doté d'une nacelle et d'un moteur;
- La figure 2 est une vue en coupe longitudinale d'une section d'entrée d'air de la nacelle de l'ensemble propulsif de la figure 1 ;
- La figure 3 est une vue schématique d'une partie de surface texturée à l'aide du procédé selon l'invention.

Les éléments identiques ou similaires sont repérés par des signes de référence identiques sur l'ensemble des figures.

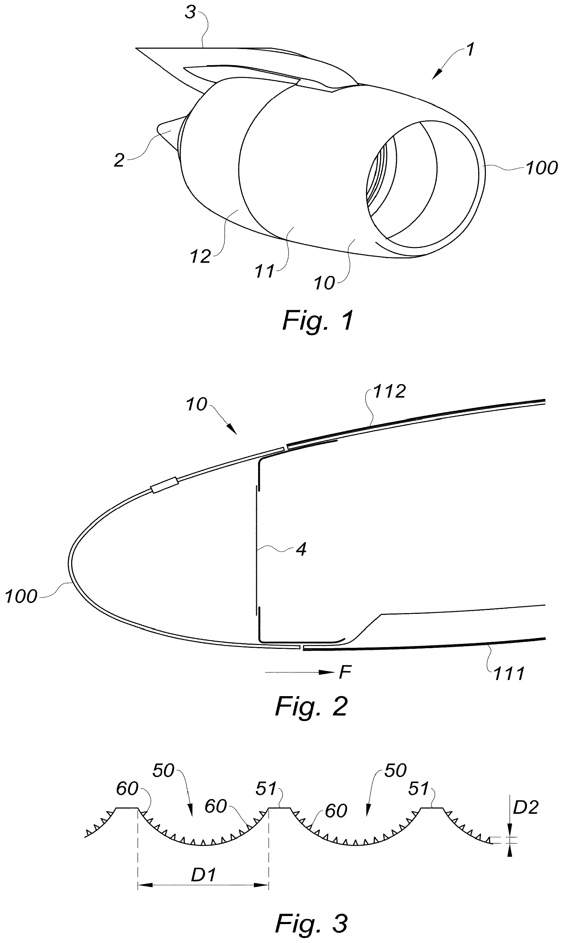

La figure 1 montre un ensemble propulsif d'aéronef comprenant une nacelle 1 supportant un moteur 2 de type turboréacteur. La nacelle 1 est suspendue à un pylône 3 relié à une aile (non représentée) de l'aéronef (non représenté).

Cette nacelle 1 comprend une section d'entrée d'air 10, une section médiane 11, et une section aval 12 pouvant abriter des moyens d'inversion de poussée.

En référence à la figure 2, la section d'entrée d'air 10 comprend une lèvre 100 formant un bord d'attaque et, dans le prolongement de la lèvre 100, une section comportant une paroi interne 111 et une paroi externe 112 formant des bords de fuite respectifs. La paroi externe 112 est radialement éloignée par rapport à la paroi interne 111. La paroi interne 111 est en contact avec un flux d'air froid F traversant la nacelle 1.

Dans cet exemple, les parois interne 111 et externe 112 sont en composite à matrice organique.

Dans cet exemple, la lèvre 100 délimite avec une cloison interne 4 un espace intérieur annulaire apte à recevoir un dispositif de traitement contre le givre (non représenté). Ce dispositif peut être un dispositif de dégivrage ou d'antigivrage, pneumatique ou électrique.

Dans un exemple non limitatif de mise en oeuvre de l'invention, la surface interne 111 de la section d'entrée d'air 10 est rendue superhydrophobe par irradiation par impulsions laser femtosecondes. Typiquement, les impulsions laser peuvent avoir une durée inférieure à 900 femtosecondes, de préférence inférieure à 600 femtosecondes.

La caractérisation hydrophobique d'un matériau se fait en mesurant l'angle de contact entre sa surface plane et une goutte d'eau posée sur sa surface : les matériaux standards ont un angle inférieur à 90°, les matériaux hydrophobes ont un angle compris entre 90° et 150° et les matériaux superhydrophobes ont un angle supérieur à 150°.

L'irradiation laser femtosecondes constitue une étape de texturation de surface pouvant donner lieu à des microcratères 50 et des cils 60.

Dans l'exemple de la figure 3, les microcratères 50 sont séparés par des sommets 51 aplatis et les cils 60 sont périodiquement espacés dans les microcratères 50.

Dans des variantes de réalisation non représentées, la surface texturée peut comprendre des cils dans les microcratères et sur les sommets, ou uniquement au niveau des sommets.

Les inventeurs estiment que des propriétés superhydrophobes adaptées au présent domaine d'application peuvent être obtenues en réalisant :
- des microcratères 50 ayant un diamètre D1 inférieur à 1 mm, de préférence compris entre 1 µm et 100 µm, et une profondeur inférieure à 10 µm, de préférence comprise entre 600 nm et 1 µm, et
- des cils ayant une dimension D2 inférieure à 1 µm, de préférence comprise entre 1 nm et 800 nm.

Un tel procédé de traitement peut aussi être mis en oeuvre pour texturer la surface externe 112 de la section d'entrée d'air 10, ce qui permet de rendre la nacelle 1 compatible avec un turboréacteur de type « open rotor », c'est-à-dire présentant une soufflante non carénée au niveau de sa section aval.

Optionnellement, la lèvre 100 de la section d'entrée d'air 10 peut aussi être rendue superhydrophobe à l'aide du procédé de l'invention. Le caractère superhydrophobe de la lèvre d'entrée d'air permet très avantageusement d'utiliser un dispositif de dégivrage par composant piézo-électrique. Le dégivrage par composant piézo-électrique consiste à faire vibrer la surface à dégivrer pour casser et évacuer les faibles couches de glace accumulées sur la lèvre. Ainsi, l'utilisation d'une surface superhydrophobe en complément d'un dispositif de dégivrage mécanique de type piézo-électrique permet de faciliter le décrochage de la glace, en ce que la force d'adhésion de la glace sur la paroi de l'élément à dégivrer est réduite.

Bien entendu, l'invention n'est pas limitée aux exemples qui viennent d'être décrits et de nombreux aménagements peuvent être apportés à ces exemples sans sortir du cadre de l'invention. Par exemple, le procédé selon l'invention peut être mis en oeuvre pour texturer d'autres pièces d'aéronef telles qu'une aile, un empennage, ou toute autre partie de nacelle ou de l'aéronef nécessitant un traitement contre l'accrétion de givre, et plus particulièrement toute pièce comprenant une surface constituant un bord de fuite ou d'attaque.

## Revendications

1. Procédé de traitement d'une surface (100, 111, 112) de pièce (10) d'aéronef en composite à matrice organique, **caractérisé en ce qu'**il comprend une étape de texturation dans laquelle la surface est irradiée par impulsions laser femtosecondes de manière à rendre cette surface superhydrophobe.

2. Procédé selon la revendication 1, dans lequel les impulsions ont une durée inférieure à 900 femtosecondes, de préférence inférieure à 600 femtosecondes.

3. Procédé selon la revendication 1 ou 2, dans lequel l'étape de texturation est précédée d'une étape de protection de la surface (100, 111, 112) par application d'une peinture organique.

4. Procédé selon la revendication 3, dans lequel la peinture comprend une base époxyde ou une base polyuréthane.

5. Pièce (10) d'aéronef en composite à matrice organique, **caractérisée en ce qu'**elle comprend une surface (100, 111, 112) traitée avec un procédé selon l'une quelconque des revendications 1 à 4.

6. Pièce (10) d'aéronef en composite à matrice organique selon la revendication précédente, **caractérisée en ce que** la surface traitée est dotée :
- de microcratères (50) ayant un diamètre inférieur à 1 mm, de préférence compris entre 1 µm et 100 µm, et une profondeur inférieure à 10 µm, de préférence comprise entre 600 nm et 1 µm, et
- de cils (60) ayant une dimension inférieure à 1 µm, de préférence comprise entre 1 nm et 800 nm, ces cils étant espacés de manière périodique.

7. Pièce (10) en composite à matrice organique selon la revendication 5 ou 6, cette pièce étant une section d'entrée d'air (10) de l'aéronef, ladite surface (100, 111, 112) étant une surface d'un bord d'attaque et/ou d'un bord de fuite de cette section d'entrée d'air (10).

8. Ensemble propulsif d'aéronef, **caractérisé en ce qu'**il comprend une pièce (10) en composite à matrice organique selon l'une quelconque des revendications 5 à 7.

9. Aéronef, **caractérisé en ce qu'**il comprend un ensemble propulsif selon la revendication 8 et/ou une pièce (10) en composite à matrice organique selon l'une quelconque des revendications 5 à 7.

## Patentansprüche

1. Verfahren zur Behandlung einer Oberfläche (100, 111, 112) eines Bauteils (10) eines Luftfahrzeugs aus organischem Matrix-Verbundwerkstoff, **dadurch gekennzeichnet, dass** es einen Texturierungsschritt umfasst, wobei die Oberfläche mit Femtosekundenlaserimpulsen bestrahlt wird, um diese Oberfläche superhydrophob zu machen.

2. Verfahren nach Anspruch 1, wobei die Impulse eine Dauer von weniger als 900 Femtosekunden haben, vorzugsweise weniger als 600 Femtosekunden.

3. Verfahren nach Anspruch 1 oder 2, wobei dem Texturierungsschritt ein Schritt zum Schutz der Oberfläche (100, 111, 112) durch Applizieren einer organischen Farbe vorausgeht.

4. Verfahren nach Anspruch 3, wobei die Farbe eine Epoxidbasis oder eine Polyurethanbasis umfasst.

5. Bauteil (10) eines Luftfahrzeugs aus organischem Matrix-Verbundwerkstoff, **dadurch gekennzeichnet, dass** es eine Oberfläche (100, 111, 112) umfasst, die mit einem Verfahren nach einem der Ansprüche 1 bis 4 behandelt wurde.

6. Bauteil (10) eines Luftfahrzeugs aus organischem Matrix-Verbundwerkstoff nach dem vorhergehenden Anspruch, **dadurch gekennzeichnet, dass** die behandelte Oberfläche versehen ist mit:
- Mikrokratern (50), die einen Durchmesser von weniger als 1 mm aufweisen, vorzugsweise zwischen 1 µm und 100 µm, und eine Tiefe von weniger als 10 µm, vorzugsweise zwischen 600 nm und 1 µm, und
- Zilien (60), die eine Größe von weniger als 1 µm aufweisen, vorzugsweise zwischen 1 nm und 800 nm, wobei diese Zilien periodisch beabstandet sind.

7. Bauteil (10) aus organischem Matrix-Verbundwerkstoff nach Anspruch 5 oder 6, wobei dieses Bauteil ein Lufteinlassbereich (10) des Luftfahrzeugs ist, wobei die Oberfläche (100, 111, 112) eine Oberfläche einer Anströmkante und/oder Abströmkante dieses Lufteinlassbereichs (10) ist.

8. Antriebsanordnung eines Luftfahrzeugs, **dadurch gekennzeichnet, dass** sie ein Bauteil (10) aus organischem Matrix-Verbundwerkstoff nach einem der Ansprüche 5 bis 7 umfasst.

9. Luftfahrzeug, **dadurch gekennzeichnet, dass** es eine Antriebsanordnung nach Anspruch 8 umfasst und/oder ein Bauteil (10) aus organischem Matrix-Verbundwerkstoff nach einem der Ansprüche 5 bis 7.

## Claims

1. A method for treating a surface (100, 111, 112) of an aircraft part (10) made of organic matrix composite, **characterized in that** it comprises a texturing step in which the surface is irradiated by femtosecond laser pulses so as to make this surface superhydrophobic.

2. The method according to claim 1, wherein the pulses have a duration of less than 900 femtoseconds, preferably less than 600 femtoseconds.

3. The method according to claim 1 or 2, wherein the texturing step is preceded by a step of protecting the surface (100, 111, 112) by applying an organic paint.

4. The method according to claim 3, wherein the paint comprises an epoxy base or a polyurethane base.

5. An aircraft part (10) made of organic matrix composite, **characterized in that** it comprises a surface (100, 111, 112) treated with a method according to any one of claims 1 to 4.

6. The aircraft part (10) made of organic matrix composite according to the preceding claim, **characterized in that** the treated surface is provided with:
- micro-craters (50) having a diameter less than 1 mm, preferably comprised between 1 µm and 100 µm, and a depth less than 10 µm, preferably comprised between 600 nm and 1 µm, and
- lashes (60) having a dimension less than 1 µm, preferably comprised between 1 nm and 800 nm, these lashes being periodically spaced.

7. The aircraft part (10) made of organic matrix composite according to claim 5 or 6, this part being an air inlet section (10) of the aircraft, said surface (100, 111, 112) being a surface of a leading edge and/or a trailing edge of this air inlet section (10).

8. An aircraft propulsion unit, **characterized in that** it comprises a part (10) made of organic matrix composite according to any one of claims 5 to 7.

9. An aircraft, **characterized in that** it comprises a propulsion unit according to claim 8 and/or a part (10) made of organic matrix composite according to any one of claims 5 to 7.
